# FASCICULE DE BREVET EUROPEEN

(11) **EP 4 554 881 B1**
(45) Date de publication et mention de la délivrance du brevet: **11.02.2026**
(21) Numéro de dépôt: 23739194.1
(22) Date de dépôt: 04.07.2023
(51) Int. Cl.: B65G 35/06, B65G 47/38, B65G 47/52, B65G 43/00

(54) **TRIEUR HAUT DÉBIT COMPACT À CHARGEMENT SUR DEUX VOIES PARALLÈLES**
KOMPAKTER SORTIERER MIT HOHEM DURCHSATZ UND BELADUNG AUF ZWEI PARALLELEN SPUREN
COMPACT HIGH-THROUGHPUT SORTER WITH LOADING ON TWO PARALLEL LANES

(30) Priorité: 12.07.2022 FR 2207155
(43) Date de publication de la demande: 21.05.2025
(73) Titulaire: Solystic, 92220 Bagneux (FR)
(72) Inventeur: BEAUGRAND, Wilfrid, 26000 VALENCE (FR); HOURS, Patrick, 07130 SAINT-PERAY (FR)
(74) Mandataire: IP Trust
(86) Numéro de dépôt international: PCT/EP2023/068422
(87) Numéro de publication internationale: WO 2024/012941

(56) Documents cités:
- EP-A1- 1 163 053
- WO-A1-2005/066048
- DE-U1- 9 320 415
- US-A1- 2016 214 799
- US-A1- 2021 094 074

## Description

### Domaine technique

L'invention se place dans le domaine de la logistique et plus particulièrement dans le domaine du tri de colis automatisé à débit élevé.

### Technique antérieure

La plupart des installations de tri de colis utilisent aujourd'hui des convoyeurs de tri en boucle équipés de sorties de tri pour trier les colis.

Ce type de convoyeur de tri comprend généralement des réceptacles pour colis aptes non seulement à convoyer les colis selon une certaine direction de convoyage mais également à les trier dans les sorties de tri selon un certain plan de tri prédéterminé.

Certaines installations de tri, telles que celle décrite dans les documents EP2921431 et EP1163053, qui divulgue toutes les caractéristiques du préambule de la revendication 1, utilisent des convoyeurs de tri à rails de guidage qui s'étendent dans la direction de convoyage et sur lesquels se déplacent des chariots aptes à déplacer les réceptacles pour colis selon la direction de convoyage.

L'utilisation de deux rails de guidage tubulaires permet notamment de diminuer le rayon de courbure du convoyeur de tri dans les virages, par rapport à des convoyeurs de tri à rails multiples plats, ce qui permet de réduire l'emprise au sol du convoyeur de tri.

Par ailleurs, l'utilisation de ce type de convoyeur de tri dont les réceptacles sont reliés entre eux en une chaîne continue impose une vitesse de convoyage constante pour l'ensemble des réceptacles se déplaçant dans la direction de convoyage. Cette vitesse doit donc être adaptée à la fois pour permettre l'évacuation des colis depuis les réceptacles dans les sorties de tri et pour permettre l'insertion des colis sur les réceptacles.

La vitesse de convoyage est donc limitée à la vitesse de convoyage applicable au niveau des dispositifs d'insertion de colis qui ne peuvent supporter des vitesses de convoyage aussi élevées qu'au niveau des zones d'évacuation de colis.

Cette vitesse de convoyage limitée impacte directement le rendement du tri des colis.

Ainsi, pour conserver un rendement de tri suffisant, une solution consiste à doubler, voire tripler, les zones d'insertion en les répartissant en aval des zones de sortie de tri. Mais cette solution est coûteuse, augmente l'emprise au sol et est contraignante pour le client en termes de gestion des flux et d'implantation dans le bâtiment.

### Exposé de l'invention

L'objectif de l'invention est donc de résoudre les problèmes précités en proposant une installation de tri à la fois compacte et efficace en termes de tri.

A cet effet, l'invention porte sur une installation de tri de colis , selon la revendication 1, comprenant un convoyeur de tri en boucle et des sorties de tri réparties le long du convoyeur de tri, ledit convoyeur de tri comprenant des réceptacles pour colis conçus pour convoyer des colis selon une certaine direction de convoyage et les trier dans les sorties de tri selon un plan de tri prédéterminé, le convoyeur de tri comprenant deux rails parallèles qui s'étendent dans la direction de convoyage et des chariots montés sur les rails conçus pour déplacer les réceptacles pour colis selon ladite certaine direction de convoyage, le convoyeur de tri comprenant un convoyeur principal qui se scinde en deux convoyeurs secondaires sur une certaine portion de convoyage, ledit convoyeur de tri comprenant un système d'aiguillage conçu pour aiguiller les chariots alternativement vers l'un ou l'autre des convoyeurs secondaires, caractérisée en ce que l'installation de tri comprend une unité centrale paramétrée pour contrôler la vitesse de déplacement des chariots de sorte que chaque réceptacle pour colis se déplacent à une vitesse V1 sur le convoyeur principal et à une vitesse V2 sur les convoyeurs secondaires, la vitesse V2 étant égale à la moitié de la vitesse V1, et en ce que ladite installation de tri comprend des dispositifs d'insertion (17) de colis conçus pour insérer les colis sur les réceptacles pour colis en convoyage sur les deux convoyeurs secondaires.

L'idée à la base de l'invention est de convoyer les colis à vitesse réduite sur les convoyeurs secondaires afin de fiabiliser l'insertion des colis sur les réceptacles et de convoyer les colis sur le convoyeur principal à vitesse élevée pour garantir un rendement de tri suffisant.

L'invention consiste dans ce but à utiliser un système d'aiguillage permettant de répartir les chariots sur chacun des deux convoyeurs secondaires afin d'appliquer une vitesse deux fois moindre que sur le convoyeur principal.

Les réceptacles étant chargés en parallèle sur les deux convoyeurs secondaires, le débit global est la somme des débits des deux convoyeurs.

L'installation de tri selon l'invention peut également présenter les caractéristiques suivantes :
- l'unité centrale est paramétrée pour contrôler la vitesse de déplacement des chariots de sorte que chaque réceptacle pour colis accélère de la vitesse V1 jusqu'à une vitesse Vmax puis ralentit de la vitesse Vmax à la vitesse V2, de sorte à créer un espace suffisant entre deux réceptacles successifs dans la direction de convoyage emmanchés sur des rails directeurs différents et à permettre leur croisement sur les convoyeurs secondaires ;
- chaque chariot comprend un élément de couplage conçu pour être emmanché sur un rail du convoyeur principal qui sert de rail directeur pour guider le chariot dans la direction de convoyage et un élément de stabilisation agencé pour venir en appui sur l'autre rail du convoyeur principal qui sert de rail suiveur pour supporter verticalement le chariot dans son déplacement selon la direction de convoyage, et en ce que le rail directeur pour chacun des convoyeurs secondaires s'étend dans le prolongement du rail directeur du convoyeur principal de sorte que le déplacement d'un chariot vers l'un ou l'autre des convoyeurs secondaires dépend du rail directeur du convoyeur principal sur lequel le montant du chariot est emmanché ;
- les rails suiveurs des convoyeurs secondaires se croisent pour former un cœur d'aiguillage de sorte à permettre le déplacement de l'élément de stabilisation d'un chariot sur le rail suiveur de l'un ou l'autre des convoyeurs secondaires en fonction du rail directeur sur lequel le chariot est emmanché et en ce que le cœur d'aiguillage se présente sous la forme d'une plateforme sensiblement plate qui est intercalée à la croisée des rails suiveurs des convoyeurs secondaires, lesdits rails suiveurs des convoyeurs secondaires et la plateforme présentant une surface d'appui continue pour l'élément de stabilisation dans la direction de convoyage ;
- le convoyeur de tri comprend deux rails de transition, disposés en amont et en aval des convoyeurs secondaires, qui font chacun la jonction entre un rail du convoyeur principal et un rail suiveur d'un des convoyeurs secondaires, chaque rail de transition étant conçu pour supporter l'élément de stabilisation d'un chariot lors du déplacement dudit élément de stabilisation dans la direction de convoyage dès lors que l'élément de stabilisation n'est plus en appui sur le rail suiveur du convoyeur principal et jusqu'à ce que l'élément de stabilisation soit de nouveau en appui sur le rail suiveur du convoyeur secondaire ;
- chaque élément de stabilisation comprend deux éléments de contact espacés l'un de l'autre dans la direction de convoyage aptes à venir en appui sur au moins un rail suiveur de sorte que l'élément de stabilisation d'un chariot comprend toujours un élément de contact en appui sur au moins un rail suiveur du convoyeur principal et/ou un des convoyeurs secondaires lors de son déplacement du convoyeur principal vers un convoyeur secondaire ;
- l'élément de couplage et l'élément de stabilisation comprennent des moyens de frottement de roulement conçus pour rouler sur les rails ;
- les rails du convoyeur de tri sont des rails tubulaires.
- plusieurs réceptacles pour colis sont reliés entre eux par des chariots pour former un train de réceptacles pour colis, en ce que le convoyeur de tri comprend une pluralité de trains de réceptacles pour colis qui se suivent dans la direction de convoyage, les chariots d'un même train étant emmanchés sur le même rail.

### Brève description des dessins

La présente invention sera mieux comprise et d'autres avantages apparaîtront à la lecture de la description détaillée du mode de réalisation pris à titre d'exemple nullement limitatif et illustré par les dessins annexés, dans lesquels :
[Fig.1] - La [Fig.1] est une représentation schématique d'une installation de tri selon l'invention ;
[Fig.2] - la [Fig.2] est une représentation schématique d'un système d'aiguillage selon l'invention ,
[Fig.3] - La [Fig.3] est une représentation schématique des convoyeurs secondaires et des chariots en cours de déplacement dans la direction de convoyage selon l'invention ;
[Fig.4] - La [Fig.4] est une représentation schématique d'un train de réceptacles sur le convoyeur de tri selon l'invention ;
[Fig.5] - La [Fig.5] est une représentation schématique d'un cœur d'aiguillage du système d'aiguillage selon l'invention.

### Description détaillée de l'invention

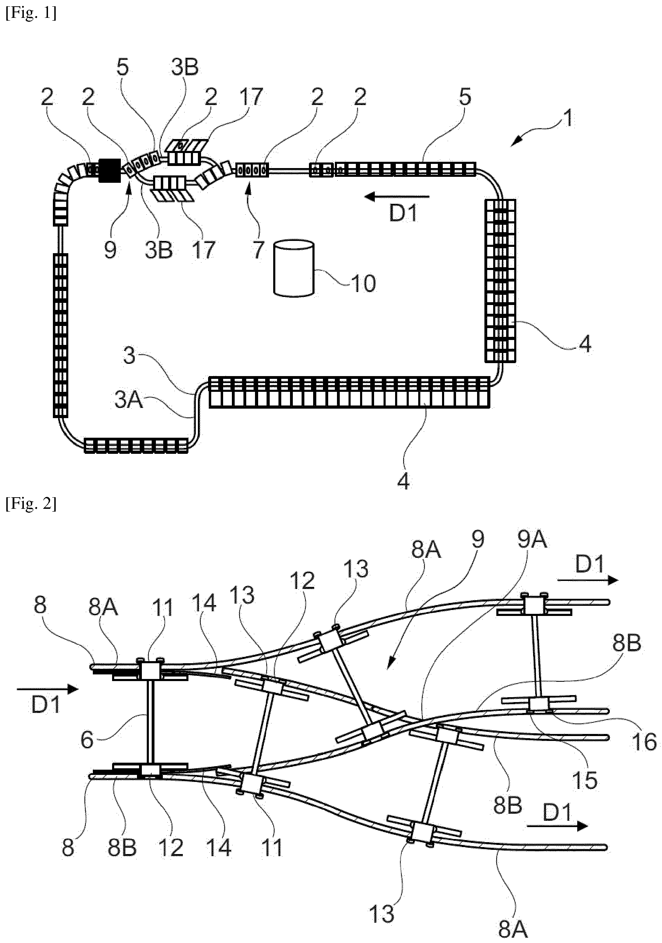

L'installation de tri 1 de colis 2 selon l'invention, également appelée trieur, représentée sur la [Fig.1] est particulièrement bien adaptée pour trier des colis hétérogènes, et notamment des colis de type PPI (petits paquets Import) typiques du e-commerce, à débit élevé tout ayant une emprise au sol réduite.

L'installation de tri 1 de colis 2 selon l'invention comprend notamment un convoyeur de tri 3 en boucle et des sorties de tri 4 réparties le long du convoyeur de tri 3.

Le convoyeur de tri 3 est équipé ici de réceptacles 5 pour colis 2 montés sur des chariots 6 conçus d'une part pour convoyer les colis 2 selon une certaine direction de convoyage D1, mais également pour trier les colis 2 selon un plan de tri prédéterminé dans les sorties de tri 4.

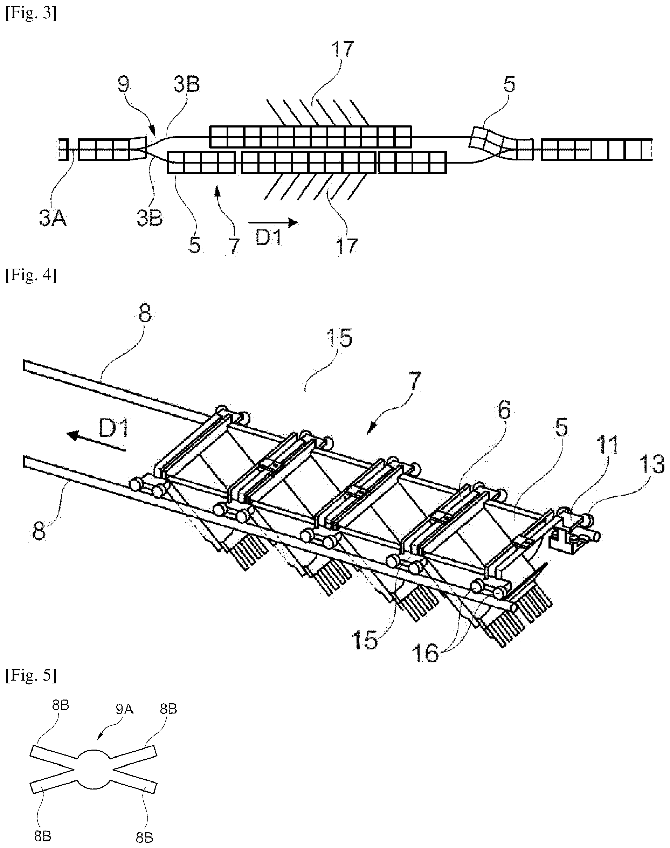

Les réceptacles 5 pour colis 2 se présentent par exemple sous la forme de godets, visibles sur la [Fig.4], munis d'une trappe d'évacuation permettant d'évacuer les colis 2 sous le convoyeur de tri 3 par gravité dans les sorties de tri 4.

Les réceptacles 5 pour colis 2 pourront également se présenter sous la forme de plateaux basculants ou équipés d'une courroie motorisée conçus pour éjecter les colis 2 sur le côté du convoyeur de tri 3 dans les sorties de tri 4.

Sans restreindre la portée de l'invention, les réceptacles 5 pour colis 2 peuvent être reliés entre eux par les chariots 6 pour former une pluralité de trains 7 de réceptacles 5 pour colis 2 qui se suivent dans la direction de convoyage D1, comme représenté sur la [Fig.4].

Chaque train 7 de réceptacles 5 comprendra préférentiellement le même type de réceptacles 5, à godet ou à plateau, afin d'optimiser l'agencement des sorties de tri 3 pour un même train 7 de réceptacles 5.

Il est toutefois possible d'utiliser un nombre différents de réceptacles 5 par train 7, par exemple un train de trois réceptacles suivi d'un train de cinq réceptacles suivi d'un train de quatre réceptacles, etc.

Le convoyeur de tri 3 selon l'invention comprend deux rails 8 parallèles qui s'étendent dans la direction de convoyage D1.

Plus particulièrement, le convoyeur de tri 3 comprend un convoyeur principal 3A qui se scinde en deux convoyeurs secondaires 3B sur une certaine portion de convoyage.

On comprend donc que le convoyeur principal 3A et les convoyeurs secondaires 3B présentent eux aussi chacun deux rails 8 parallèles qui s'étendent dans la direction de convoyage D1.

Le convoyeur de tri 3 est ici équipé d'un système d'aiguillage 9 conçu pour aiguiller les chariots 6 vers l'un ou l'autre des convoyeurs secondaires 3B.

Un système d'aiguillage 9 du même type pourra également être prévu en aval dans la direction de convoyage D1 afin d'aiguiller les chariots 6 vers le convoyeur principal 3A depuis l'un ou l'autre des convoyeurs secondaires 3B.

A titre d'exemples nullement limitatifs, le système d'aiguillage 9 pourra être soit actif avec des lames d'aiguilles mobiles contrôlées par une unité centrale 10 de manière à aiguiller les chariots sur l'un ou l'autre des convoyeurs secondaires, soit passif comme représenté sur la [Fig.2], c'est-à-dire sans que les rails n'aient de partie mobile.

Dans le cas d'un aiguillage passif, chaque chariot 6 selon l'invention comprend un élément de couplage 11 conçu pour être emmanché sur un rail 8 du convoyeur principal 3A qui sert de rail directeur 8A pour guider le chariot 6 dans la direction de convoyage et un élément de stabilisation 12 agencé pour venir en appui sur l'autre rail 8 du convoyeur principal 3A qui sert de rail suiveur 8B pour supporter verticalement le chariot 6 dans son déplacement selon la direction de convoyage D1.

Plus particulièrement, chacun des convoyeurs secondaires 3B comprend un rail 8 qui sert de rail directeur 8A et qui s'étend dans le prolongement du rail directeur 8A du convoyeur principal 3A de sorte que le déplacement d'un chariot 6 vers l'un ou l'autre des convoyeurs secondaires 3B dépend du rail 8A directeur du convoyeur principal 3A sur lequel le montant du chariot 6 est emmanché.

Les rails 8 du convoyeur principal peuvent donc prendre la fonction de rail directeur 8A ou de rail suiveur 8B selon le rail 8 sur lequel est emmanché le chariot 6.

Les rails 8 du convoyeur principal sont donc prolongés chacun par le rail directeur 8A des convoyeurs secondaires sans aucune discontinuité.

Grâce à cet aiguillage passif, le convoyeur de tri 3 peut aiguiller les trains 7 de réceptacles 5 vers l'un ou l'autre des convoyeurs secondaires 3B de manière passive, c'est-à-dire que les trains 7 se déplacent dans la direction de convoyage D1 en empruntant toujours le même convoyeur secondaire 3B.

L'aiguillage passif à l'avantage par rapport à l'aiguillage actif de ne pas déplacer de portions de rails 8 dont la masse est très importante et dont le déplacement devrait être effectué très rapidement compte tenu de la vitesse des trains 7 et de leur proximité.

Aussi, l'utilisation d'aiguillage passif nécessite d'emmancher les trains 7 de réceptacles 5 successifs de manière alternative sur les rails 8 du convoyeur principal 3A de sorte que les convoyeurs secondaires 3B reçoivent un train 7 de réceptacles 5 sur deux.

Aussi, pour faciliter le déplacement des chariots 6 sur les rails 8, l'élément de couplage 11 et l'élément de stabilisation 12 comprennent des moyens de frottement de roulement 13 conçus pour rouler sur les rails.

Les rails 8 du convoyeur de tri 3 tels que représentés sont des rails tubulaires contre lesquels les éléments de couplage 11 et de stabilisation 12 viennent au contact, et notamment les moyens de frottement de roulement 13.

De manière différente mais nullement limitative, Les rails 8 du convoyeur de tri 3 pourraient également se présenter sous la forme de rails en profilé à bord droit.

On comprend ici que les chariots 6 d'un même train 7 doivent être emmanchés sur le même rail 8 pour pouvoir être aiguillés ensemble sur le même convoyeur secondaire 3B.

Le système d'aiguillage 9 selon l'invention est ici agencé de sorte que les rails suiveurs 8B des convoyeurs secondaires 3B se croisent pour former un cœur d'aiguillage 9A.

Le cœur d'aiguillage 9A, représenté sur la [Fig.5], permet ici de déplacer l'élément de stabilisation 11 d'un chariot 6 sur le rail suiveur 8B sur l'un ou l'autre des convoyeurs secondaires 3B en fonction du rail directeur 8A sur lequel le chariot 6 est emmanché.

Le cœur d'aiguillage 9A se présente ici sous la forme d'une plateforme sensiblement plate qui est intercalée à la croisée des rails suiveurs 8B des convoyeurs secondaires 3B.

Plus particulièrement, les rails suiveurs 8B des convoyeurs secondaires 3B et la plateforme présentent une surface d'appui continue pour l'élément de stabilisation 12 dans la direction de convoyage de sorte que les chariots 6 peuvent se déplacer sur un rail suiveur 8B d'un convoyeur secondaire 3B et croiser le rail suiveur 8B de l'autre convoyeur secondaire 3B sans être perturbés dans leur déplacement.

Dans le cas de l'utilisation d'un système d'aiguillage 9 passif, on peut également prévoir deux rails de transition 14 qui font chacun la jonction entre un rail 8 du convoyeur principal 3A et un rail suiveur 8B d'un des convoyeurs secondaires 3B.

Chaque rail de transition 14 est ici conçu pour supporter l'élément de stabilisation 12 d'un chariot 6 lors du déplacement de l'élément de stabilisation 12 dans la direction de convoyage D1 dès lors que l'élément de stabilisation 12 n'est plus en appui sur le rail suiveur 8B du convoyeur principal 3A et jusqu'à ce que l'élément de stabilisation 12 soit de nouveau en appui sur le rail suiveur 8B du convoyeur secondaire 3B.

L'élément de stabilisation 12 comprendra par exemple un galet 15 déporté sur le dessus ou sur le côté du chariot 6 pour venir au contact du rail transitoire 14.

Une alternative à l'utilisation de rail de transition 14 est d'utiliser des éléments de stabilisation 12 comprenant deux éléments de contact 16 espacés l'un de l'autre dans la direction de convoyage aptes à venir en appui sur au moins un rail suiveur 8B de sorte que l'élément de stabilisation 12 d'un chariot 6 comprend toujours un élément de contact 16 en appui sur au moins un rail suiveur 8B du convoyeur principal 3A et/ou un des convoyeurs secondaires 3B lors de son déplacement du convoyeur principal 3A vers un convoyeur secondaire 3B.

Sans restreindre la portée de l'invention, il est tout à fait possible de combiner l'utilisation des rails transitoires 14 avec des éléments de stabilisation 12 à deux éléments de contact 16 espacés.

L'installation de tri selon l'invention comprend également des dispositifs d'insertion 17 de colis 2 conçus pour insérer les colis 2 sur les réceptacles 5 en convoyage sur chacun des convoyeurs secondaires 3B.

A titre d'exemple nullement limitatif, les dispositifs d'insertion 17 sont ici agencés pour venir à fleur du convoyeur de tri 3 de sorte que les colis 2 sont injectés transversalement à la direction de convoyage D1 par simple glissement ou par entraînement par courroies motorisées.

Les réceptacles 5 pour colis 2 peuvent également présenter avantageusement une surface de pose du colis 2 qui s'étend sensiblement à la même hauteur que les rails 8 du convoyeur de tri 3.

Cela permet notamment de limiter le rapprochement entre les colis et les réceptacles en montée, de réduire les contraintes sur les rails 8 et les chariots 6 et de faciliter l'évacuation des colis 2, que ce soit sous le convoyeur de tri 3 ou sur le côté du convoyeur de tri 3.

Grâce à l'installation de tri 1 selon l'invention, il est possible d'optimiser la cadence de tri en convoyant les colis 2 à vitesse élevé sur le convoyeur principal 3A et en circulant sur deux voies en parallèle pour maintenir la cadence globale au niveau des dispositifs d'insertion 17 sur les convoyeurs secondaires 3B où la vitesse est divisée par 2.

Pour cela, l'unité centrale 10 est paramétrée pour contrôler la vitesse de déplacement des trains 7 de réceptacles 5 pour colis 2 de sorte que chaque train 7 de réceptacles 5 se déplace à une vitesse V1 sur le convoyeur principal 3A et à une vitesse V2 sur les convoyeurs secondaires 3B, la vitesse V2 étant égale à la moitié de la vitesse V1.

La vitesse V1 sera par exemple comprise entre 1,5 et 2m/s (mètre par seconde), de préférence 1,8m/s.

Pour une vitesse nominale de 1,8m/s sur le convoyeur principal 3A, on comprend que la vitesse sur les convoyeurs secondaires 3B au niveau des dispositifs d'insertion sera de 0.9m/s.

Plus particulièrement, l'unité centrale 10 est paramétrée pour contrôler la vitesse de déplacement des trains 7 de réceptacles 5 pour colis 2 de sorte que chaque train 7 de réceptacles 5 accélère de la vitesse V1 jusqu'à une vitesse Vmax puis ralenti de la vitesse Vmax à la vitesse V2, de sorte à créer un espace suffisant entre deux trains 7 successifs dans la direction de convoyage D1 emmanchés sur des rails directeurs 8A différents pour permettre leur croisement sur les convoyeurs secondaires 3B.

La vitesse Vmax est calculée en fonction de la longueur des trains 7 de réceptacles et de la longueur du système d'aiguillage 9.

Par longueur du système d'aiguillage 9, on considère un point dans l'espace représentatif de l'endroit où le chariot 6 ou le train 7 de réceptacles 5 quitte le convoyeur principal 3A jusqu'au cœur d'aiguillage 9A.

A titre d'exemple, les vitesses qui sont mises en jeu pour réaliser une cinétique d'accélération et de ralentissement des chariots 6 selon l'invention dans le cas d'un rayon de courbure minimal des déviations de 2 mètres sont les suivantes :
L'accélération se fait à 4m/s² pendant 175ms et s'étend sur 376mm pour atteindre Vmax à 2,5m/s.

Vmax est alors maintenue pendant 1,5s et s'étend sur 3.75m.

Enfin, le freinage à 0.9m/s dure quant à lui 400ms et s'étend sur 680mm.

On comprendra que cette accélération et ce ralentissement successifs permettent aux chariots 6 ou aux trains 7 de réceptacles 5, de se déplacer sur leur rail suiveur 8B en passant par le cœur d'aiguillage 9A sans entrer en collision, comme représenté en [Fig.3].

On comprendra que la longueur de l'ensemble des chariots 6 est inférieure à la longueur du convoyeur de tri 3 de sorte à conserver l'espace nécessaire entre deux chariots 6 ou deux trains 7 au moment du passage sur le cœur d'aiguillage 9A.

Enfin, mise à part l'accélération et le ralentissement des chariots 6 au niveau du système d'aiguillage 9, les vitesses des chariots 6 sur le convoyeur principal 3A et les convoyeurs secondaires 3B sont respectivement constantes.

## Revendications

1. Installation de tri (1) de colis (2) comprenant un convoyeur de tri (3) en boucle et des sorties de tri (4) réparties le long du convoyeur de tri, ledit convoyeur de tri comprenant des réceptacles (5) pour colis conçus pour convoyer des colis selon une certaine direction de convoyage (D1) et les trier dans les sorties de tri selon un plan de tri prédéterminé, le convoyeur de tri comprenant deux rails (8) parallèles qui s'étendent dans la direction de convoyage et des chariots (6) montés sur les rails conçus pour déplacer les réceptacles pour colis selon ladite certaine direction de convoyage, le convoyeur de tri comprenant un convoyeur principal (3A) qui se scinde en deux convoyeurs secondaires (3B) sur une certaine portion de convoyage, ledit convoyeur de tri comprenant un système d'aiguillage (9) conçu pour aiguiller les chariots alternativement vers l'un ou l'autre des convoyeurs secondaires, **caractérisée en ce que** l'installation de tri comprend une unité centrale (10) paramétrée pour contrôler la vitesse de déplacement des chariots de sorte que chaque réceptacle pour colis se déplacent à une vitesse V1 sur le convoyeur principal et à une vitesse V2 sur les convoyeurs secondaires, la vitesse V2 étant égale à la moitié de la vitesse V1, et **en ce que** ladite installation de tri comprend des dispositifs d'insertion (17) de colis conçus pour insérer les colis sur les réceptacles pour colis en convoyage sur les deux convoyeurs secondaires.

2. Installation de tri de colis selon la revendication 1, **caractérisée en ce que** l'unité centrale est paramétrée pour contrôler la vitesse de déplacement des chariots de sorte que chaque réceptacle pour colis accélère de la vitesse V1 jusqu'à une vitesse Vmax puis ralenti de la vitesse Vmax à la vitesse V2, de sorte à créer un espace suffisant entre deux réceptacles successifs dans la direction de convoyage emmanchés sur des rails directeurs différents et à permettre leur croisement sur les convoyeurs secondaires.

3. Installation de tri de colis selon la revendication 1 ou 2, **caractérisée en ce que** chaque chariot comprend un élément de couplage (11) conçu pour être emmanché sur un rail du convoyeur principal qui sert de rail directeur (8A) pour guider le chariot dans la direction de convoyage et un élément de stabilisation (12) agencé pour venir en appui sur l'autre rail du convoyeur principal qui sert de rail suiveur (8B) pour supporter verticalement le chariot dans son déplacement selon la direction de convoyage, et **en ce que** le rail directeur pour chacun des convoyeurs secondaires s'étend dans le prolongement du rail directeur du convoyeur principal de sorte que le déplacement d'un chariot vers l'un ou l'autre des convoyeurs secondaires dépend du rail directeur du convoyeur principal sur lequel le montant du chariot est emmanché.

4. Installation de tri de colis selon la revendication 3, **caractérisée en ce que** les rails suiveurs des convoyeurs secondaires se croisent pour former un cœur d'aiguillage (9A) de sorte à permettre le déplacement de l'élément de stabilisation d'un chariot sur le rail suiveur de l'un ou l'autre des convoyeurs secondaires en fonction du rail directeur sur lequel le chariot est emmanché et **en ce que** le cœur d'aiguillage se présente sous la forme d'une plateforme sensiblement plate qui est intercalée à la croisée des rails suiveurs des convoyeurs secondaires, lesdits rails suiveurs des convoyeurs secondaires et la plateforme présentant une surface d'appui continue pour l'élément de stabilisation dans la direction de convoyage.

5. Installation de tri de colis selon la revendication 3 ou 4, **caractérisée en ce que** le convoyeur de tri comprend deux rails de transition (14), disposés en amont et en aval des convoyeurs secondaires, qui font chacun la jonction entre un rail du convoyeur principal et un rail suiveur d'un des convoyeurs secondaires, chaque rail de transition étant conçu pour supporter l'élément de stabilisation d'un chariot lors du déplacement dudit élément de stabilisation dans la direction de convoyage dès lors que l'élément de stabilisation n'est plus en appui sur le rail suiveur du convoyeur principal et jusqu'à ce que l'élément de stabilisation soit de nouveau en appui sur le rail suiveur du convoyeur secondaire.

6. Installation de tri de colis selon la revendication 3 ou 4, **caractérisée en ce que** chaque élément de stabilisation comprend deux éléments de contact (16) espacés l'un de l'autre dans la direction de convoyage aptes à venir en appui sur au moins un rail suiveur de sorte que l'élément de stabilisation d'un chariot comprend toujours un élément de contact en appui sur au moins un rail suiveur du convoyeur principal et/ou un des convoyeurs secondaires lors de son déplacement du convoyeur principal vers un convoyeur secondaire.

7. Installation de tri de colis selon l'une quelconque des revendications 3 à 6, **caractérisée en ce que** l'élément de couplage et l'élément de stabilisation comprennent des moyens de frottement de roulement (13) conçus pour rouler sur les rails.

8. Installation de tri de colis selon l'une quelconque des revendications précédentes, **caractérisée en ce que** les rails du convoyeur de tri sont des rails tubulaires.

9. Installation de tri de colis selon l'une quelconque des revendications précédentes, **caractérisée en ce que** plusieurs réceptacles pour colis sont reliés entre eux par des chariots pour former un train (7) de réceptacles pour colis, **en ce que** le convoyeur de tri comprend une pluralité de trains de réceptacles pour colis qui se suivent dans la direction de convoyage, les chariots d'un même train étant emmanchés sur le même rail.

## Patentansprüche

1. Sortieranlage (1) für Pakete (2), umfassend einen schleifenförmigen Sortierförderer (3) und Sortierauslässe (4), die entlang des Sortierförderers verteilt sind, der Sortierförderer umfassend Paketbehälter (5), die zum Befördern von Paketen in einer bestimmten Förderrichtung (D1) und zum Sortieren davon gemäß einem vorgegebenen Sortierplan in die Sortierauslässe ausgelegt sind, der Sortierförderer umfassend zwei parallele Schienen (8), die sich in der Förderrichtung erstrecken, und Wagen (6), die auf den Schienen montiert sind, zum Bewegen der Paketbehälter in der bestimmten Förderrichtung, der Sortierförderer umfassend einen Hauptförderer (3A), der sich auf einem bestimmten Förderabschnitt in zwei Nebenförderer (3B) aufteilt, der Sortierförderer umfassend ein Weichensystem (9), das zum Stellen der Weichen für die Wagen abwechselnd in Richtung des einen oder des anderen Nebenförderers ausgelegt ist, **dadurch gekennzeichnet, dass** die Sortieranlage eine zentrale Einheit (10) umfasst, die zum Steuern der Bewegungsgeschwindigkeit der Wagen so konfiguriert ist, dass sich jeder Paketbehälter mit einer Geschwindigkeit V1 auf dem Hauptförderer und mit einer Geschwindigkeit V2 auf den Nebenförderern bewegt, wobei die Geschwindigkeit V2 der Hälfte der Geschwindigkeit V1 entspricht, und **dadurch, dass** die Sortieranlage Paketzuführungsvorrichtungen (17) umfasst, die zum Zuführen der Paketen in die Paketbehälter ausgelegt sind, die auf den zwei Nebenförderern befördert werden.

2. Paketsortieranlage nach Anspruch 1, **dadurch gekennzeichnet, dass** die zentrale Einheit zum Steuern der Bewegungsgeschwindigkeit der Wagen so parametriert ist, dass jeder Paketbehälter von der Geschwindigkeit V1 bis auf eine Geschwindigkeit Vmax beschleunigt, dann von der Geschwindigkeit Vmax auf die Geschwindigkeit V2 verlangsamt, um ausreichend Platz zwischen zwei in der Förderrichtung aufeinanderfolgenden Behältern zu schaffen, die auf unterschiedliche Leitschienen aufgeschoben sind, und um ihr Kreuzen auf den Nebenförderern zu ermöglichen.

3. Paketsortieranlage nach Anspruch 1 oder 2,
**dadurch gekennzeichnet, dass** jeder Wagen ein Kopplungselement (11), das zum Einsetzen auf einer Schiene des Hauptförderers ausgelegt ist, die als Leitschiene (8A) zum Führen des Wagens in der Förderrichtung dient, und ein Stabilisierungselement (12) umfasst, das zum Anliegen an der anderen Schiene des Hauptförderers angeordnet ist, die als Folgeschiene (8B) zum vertikalen Tragen des Wagens bei seiner Bewegung entlang der Förderrichtung dient, und **dadurch, dass** sich die Leitschiene für jeden der Nebenförderer in der Verlängerung der Leitschiene des Hauptförderers so erstreckt, dass die Bewegung eines Wagens in Richtung eines der Nebenförderer von der Leitschiene des Hauptförderers abhängt, auf die der Wagenständer aufgeschoben ist.

4. Paketsortieranlage nach Anspruch 3, **dadurch gekennzeichnet, dass** sich die Folgeschienen der Nebenförderer zum Ausbilden eines Weichenherzes (9A) kreuzen, um die Bewegung des Stabilisierungselements eines Wagens auf der Folgeschiene des einen oder des anderen Nebenförderers in Abhängigkeit von der Leitschiene zu ermöglichen, auf die der Wagen aufgeschoben ist, und
**dadurch, dass** das Weichenherz die Form einer im Wesentlichen flachen Plattform aufweist, die an der Kreuzungsstelle der Folgeschienen der Nebenförderer eingefügt ist, wobei die Folgeschienen der Nebenförderer und die Plattform eine Anlageoberfläche für das Stabilisierungselement in die Förderrichtung aufweisen.

5. Paketsortieranlage nach Anspruch 3 oder 4,
**dadurch gekennzeichnet, dass** der Sortierförderer zwei Übergangsschienen (14) umfasst, die vor und hinter den Nebenförderern angeordnet sind, die jeweils die Verbindung zwischen einer Schiene des Hauptförderers und einer Folgeschiene eines der Nebenförderer bilden, wobei jede Übergangsschiene zum Tragen des Stabilisierungselements eines Wagens während der Bewegung des Stabilisierungselements in die Förderrichtung ausgelegt ist, sobald das Stabilisierungselement nicht mehr an der Folgeschiene des Hauptförderers anliegt und bis das Stabilisierungselement erneut auf der Folgeschiene des Nebenförderers anliegt.

6. Paketsortieranlage nach Anspruch 3 oder 4,
**dadurch gekennzeichnet, dass** jedes Stabilisierungselement zwei Kontaktelemente (16) umfasst, die in der Förderrichtung voneinander beabstandet sind, die geeignet sind, an mindestens einer Folgeschiene so anzuliegen, dass das Stabilisierungselement eines Wagens bei seiner Bewegung von dem Hauptförderer in Richtung eines Nebenförderers stets ein Kontaktelement umfasst, das an mindestens einer Folgeschiene des Hauptförderers und/oder eines der Nebenförderer anliegt.

7. Paketsortieranlage nach einem der Ansprüche 3 bis 6,
**dadurch gekennzeichnet, dass** das Kopplungselement und das Stabilisierungselement Rollreibungseinrichtungen (13) umfassen, die zum Rollen auf den Schienen ausgelegt sind.

8. Paketsortieranlage nach einem der vorstehenden Ansprüche,
**dadurch gekennzeichnet, dass** die Schienen des Sortierförderers rohrförmige Schienen sind.

9. Paketsortieranlage nach einem der vorstehenden Ansprüche,
**dadurch gekennzeichnet, dass** mehrere Paketbehälter zum Ausbilden eines Zugs (7) von Paketbehältern durch Wagen miteinander verbunden sind,
**dadurch, dass** der Sortierförderer eine Vielzahl von Zügen von Paketbehältern umfasst, die in der Förderrichtung aufeinander folgen, wobei die Wagen eines gleichen Zuges auf dieselbe Schiene aufgeschoben sind.

## Claims

1. Installation (1) for sorting packages (2), the installation comprising a looped sorting conveyor (3) and sorting outlets (4) distributed along the sorting conveyor, said sorting conveyor comprising receptacles (5) for packages, which receptacles are designed to convey packages in a certain conveying direction (D1) and to sort them into the sorting outlets according to a predetermined sorting plan, the sorting conveyor comprising two parallel rails (8) extending in the conveying direction and carriages (6) mounted on the rails and designed to move the receptacles for packages in said certain conveying direction, the sorting conveyor comprising a main conveyor (3A) which splits into two secondary conveyors (3B) over a certain conveying portion, said sorting conveyor comprising a switching system (9) designed to switch the carriages alternatingly toward one or the other of the secondary conveyors, **characterized in that** the sorting installation comprises a central unit (10) configured to control the movement speed of the carriages such that each receptacle for packages moves at a speed V1 on the main conveyor and at a speed V2 on the secondary conveyors, the speed V2 being equal to half of the speed V1, and **in that** said sorting installation comprises package insertion devices (17) designed to insert the packages onto the receptacles for packages while said receptacles are being conveyed on the two secondary conveyors.

2. Package sorting installation according to claim 1, **characterized in that** the central unit is configured to control the movement speed of the carriages such that each receptacle for packages accelerates from the speed V1 to a speed Vmax and then decelerates from the speed Vmax to the speed V2 so as to create sufficient space between two receptacles that are successive in the conveying direction and are fitted on different leading rails, and so as to allow them to cross on the secondary conveyors.

3. Package sorting installation according to claim 1 or 2,
**characterized in that** each carriage comprises a coupling element (11) designed to be fitted onto a rail of the main conveyor which acts as a leading rail (8A) for guiding the carriage in the conveying direction and a stabilizing element (12) arranged to bear on the other rail of the main conveyor which acts as a follower rail (8B) for vertically supporting the carriage in its movement in the conveying direction, and **in that** the leading rail for each of the secondary conveyors extends as a continuation of the leading rail of the main conveyor such that the movement of a carriage toward one or the other of the secondary conveyors depends on the leading rail of the main conveyor on which the upright of the carriage is fitted.

4. Package sorting installation according to claim 3, **characterized in that** the follower rails of the secondary conveyors intersect to form a switching core (9A) so as to allow the stabilizing element of a carriage to move on the follower rail of one or the other of the secondary conveyors on the basis of the leading rail on which the carriage is fitted, and **in that** the switching core is in the form of a substantially flat platform which is inserted at the intersection of the follower rails of the secondary conveyors, said follower rails of the secondary conveyors and the platform having a bearing surface for the stabilizing element, which bearing surface is continuous in the conveying direction.

5. Package sorting installation according to claim 3 or 4,
**characterized in that** the sorting conveyor comprises two transition rails (14) which are located upstream and downstream of the secondary conveyors and each form the junction between a rail of the main conveyor and a follower rail of one of the secondary conveyors, each transition rail being designed to support the stabilizing element of a carriage during the movement of said stabilizing element in the conveying direction, from when the stabilizing element is no longer bearing on the follower rail of the main conveyor until the stabilizing element is again bearing on the follower rail of the secondary conveyor.

6. Package sorting installation according to claim 3 or 4,
**characterized in that** each stabilizing element comprises two contact elements (16) spaced apart from one another in the conveying direction and capable of bearing on at least one follower rail such that the stabilizing element of a carriage always comprises a contact element bearing on at least a follower rail of the main conveyor and/or a follower rail of the secondary conveyors during its movement from the main conveyor to a secondary conveyor.

7. Package sorting installation according to any of claims 3 to 6,
**characterized in that** the coupling element and the stabilizing element comprise rolling friction means (13) designed to roll on the rails.

8. Package sorting installation according to any of the preceding claims,
**characterized in that** the rails of the sorting conveyor are tubular rails.

9. Package sorting installation according to any of the preceding claims,
**characterized in that** a plurality of receptacles for packages are connected to one another by carriages to form a train (7) of receptacles for packages, and **in that** the sorting conveyor comprises a plurality of trains of receptacles for packages, which trains follow one another in the conveying direction, the carriages of the same train being fitted on the same rail.
